# EUROPEAN PATENT SPECIFICATION

(11) **EP 0 796 883 B1**
(45) Date of publication and mention of the grant of the patent: **30.07.2003**
(21) Application number: 97104878.0
(22) Date of filing: 21.03.1997
(51) Int. Cl.: C08J 3/12, C08J 3/24, C08L 83/12

(54) **Silicone rubber powder and preparation thereof**
Silikonkautschukpulver und Verfahren zur Herstellung
Poudre de caoutchouc de silicone et procédé de préparation

(30) Priority: 22.03.1996 JP 9328796; 22.03.1996 JP 9328896
(43) Date of publication of application: 24.09.1997
(73) Proprietor: Dow Corning Toray Silicone Company, Limited, Tokyo 103 (JP)
(72) Inventor: Harashima, Asao, Ichihara-shi, Chiba Prefecture (JP); Morita, Yoshitsugu, Ichihara-shi, Chiba Prefecture (JP); Tachibana, Ryuji, Ichihara-shi, Chiba Prefecture (JP)
(74) Representative: Spott, Gottfried, Dr.

(56) References cited:
- EP-A- 0 131 446
- EP-A- 0 309 722
- EP-A- 0 545 002
- FR-A- 2 630 125

## Description

This invention provices an addition reaction-curing silicone rubber composition and a highly hydrophilic silicone rubber powder obtained therefrom that has a soft feel.

Silicone rubber powders are used as additives for cosmetics, paints, inks, and organic resins. Such powders are particularly well-suited for application as a cosmetic additive that provides a smooth feel or as a paint additive for deglossing paint films. These silicone rubber powders are generally exemplified by JP-As 59-68333; 64-56735; 64-70558; 64-81856; and 3-250050.

However, these silicone rubber powders have a poor flowability and hydrophilicity. As a result, when added to a waterborne cosmetic or paint, they either cannot be dispersed to homogeneity; or if a dispersion is obtained, the silicone rubber powder separates during storage. In response to these problems JP-A 7-102075 has proposed a silicone rubber powder having amorphous silica immobilized or anchored on the powder surface. Unfortunately, this powder itself has a rough, gritty feel and cosmetics formulated these with a rough, unnatural feel. Silicone rubber powders can also be prepared by emulsifying a curable silicone composition in an aqueous surfactant solution and thereafter curing the composition. However, a poor hydrophilicity is still exhibited for the silicone rubber powders prepared from silicon-bonded polyoxyalkylene-functional polyorganosiloxane as a surfactant JP-A-4-183726.

EP-A-0 545 002 discloses a silicone polymer, a paste-like silicone composition prepared by kneading the silicone polymer and a silicone oil under a shearing force, and a water-in-oil type cosmetic composition comprising the paste-like silicone composition as an oil phase component. The silicone polymer is prepared by the addition polymerization of components comprising an organohydrogenpolysiloxane R¹ₐR²_{b}H_{c}SiO_{(4-a-b-c)/2} (1) or R¹_{f}H_{g}SiO_{(4-f-g)/2} (2) and a polyoxyalkylene CₘH₂ₘ₋₁O(C₂H₄O)ₕ(C₃H₆O)ᵢCₘH₂ₘ₋₁ (A) or an organopolysiloxane R¹ⱼR⁴ₖSiO_{(4-j-k)/2} (B), the components including (1) or (A) as an essential component.

EP-A-0 131 446 discloses a cured product which resists soiling under outdoor exposure obtained from a mixture of a silanol-containing polyorganosiloxane having at least one silicon-bonded oxyalkylene radical of the formula -R¹O(R²O)ₙR³ and a curing agent.

An object of the present invention is to provide an addition reaction-curing silicone rubber composition and a highly hydrophilic silicone rubber powder obtained therefrom.

The present invention, therefore, is an addition reaction-curing silicone rubber composition as claimed in claim 1 and a silicone rubber powder as claimed in claim 6.

The addition reaction-curing silicone rubber composition according to the present invention is characterized in that at least one polyoxyalkylene group of the formula

-R¹(OR²)ₘOR³

is bonded to silicon in the polyorganosiloxane chains that form said powder. R¹ is independently selected from alkylene radical having 1 to 20 carbon atoms, and is exemplified by ethylene, propylene, and butylene with ethylene or propylene being preferred. R² is also independently selected from alkylene radical having 1 to 20 carbon atoms, which may be the same as or different from R¹. Ethylene is preferred for R². R³ is hydrogen atom or alkyl radical having 1 to 10 carbon atoms, and is exemplified by methyl, ethyl, and propyl. The subscript m in the formula is an integer with a value of 2 to 100, preferably 5 to 20. The molecular structure of this polyorganosiloxane is exemplified by straight-chain, partially branched straight-chain, branched-chain, cyclic, and resin structures with straight-chain orpartially branched straight-chain structures being preferred.

The polyoxyalkylene group under consideration is exemplified by:

-C₂H₄(OC₂H₄)ₘOH,

-C₂H₄(OC₂H₄)ₘOCH₃,

-C₂H₄(OC₂H₄)ₙ(OC₃H₆)ₚOH,

-C₂H₄(OC₂H₄)ₙ(OC₃H₆)ₚOCH₃,

-C₃H₆(OC₂H₄)ₘOH,

-C₃H₆(OC₂H₄)ₘOCH₃,

-C₃H₆(OC₂H₄)ₙ(OC₃H₆)ₚOH, and

-C₃H₆(OC₂H₄)ₙ(OC₃H₆)ₚOCH₃

in which m is an integer with a value of 2 to 100, n is zero or a positive integer, p is a positive integer, and n + p is an integer with a value of 2 to 100. Among these polyoxyalkylene groups,those whose main chain consists only of the (OC₂H₄) repeat unit are preferred for their ability to impart a soft feel and excellent hydrophilicity to the product silicone rubber powder. This subject polyoxyalkylene group must be bonded to a silicon atom in the polyorganosiloxane chains that form the silicone rubber.

The curing reaction that forms our silicone rubber is an addition reaction between alkenyl and silicon-bonded hydrogen. The silicon-bonded polyoxyalkylene-functional polyorganosiloxane is simply contained in the silicone rubber powder and does not participate in the curing reaction that produces silicone rubber.

Our silicone rubber powder has a JIS A durometer (JIS K 6301) preferably of 10 to 50, and more preferably of 20 to 45. The shape of our silicone rubber powder is exemplified by spherical, flattened or disk-like, and amorphous morphologies. It will have a spherical, flattened or disk-like shape when it is produced through spraying or emulsification. It will have an amorphous or irregular shape when it is produced by pulverization. The average particle size of the claimed silicone rubber powder is preferably no larger than 500 micrometers, and more preferably no larger than 250 micrometers.

The preparative method is characterized by pulverizing a cured silicone rubber which is formed by curing a silicone composition of this invention. The technique for pulverizing a silicone rubber is exemplified by using a pulverizing or grinding device such as a stamp mill, bell crusher, roll mill, hammer mill, drum mill, and jet mill. Pulverization is preferably carried out while cooling with water or liquid nitrogen since pulverization can increase the temperature.

The corresponding addition reaction-curing silicone rubber composition comprises
(A) 100 weight parts of a polyorganosiloxane that contains at least 2 silicon-bonded alkenyl groups in each molecule;
(B) a polyorganosiloxane containing at least 2 silicon-bonded hydrogen atoms in each molecule, in a quantity that provides 0.1 to 10 moles of silicon-bonded hydrogen from component (B) per one mole of alkenyl radical in the present composition;
(C) 0.001 to 20 weight parts of
   an polyorganosiloxane that contains at least one polyoxyalkylene group of the formula

   -R¹(OR²)ₘOR³

   bonded to silicon,
   and
(D) a platinum catalyst in sufficient quantity to cure the composition.

Component (A) is a polyorganosiloxane that has at least 2 silicon-bonded alkenyl groups in each molecule. The molecular structure of component (A) is a straight-chain, partially branched straight-chain, branched-chain, cyclic, or resin structure, with straight-chain and partially branched straight-chain structures being preferred. The alkenyl groups of component (A) are vinyl, allyl, butenyl, pentenyl, and hexenyl with vinyl being preferred. The non-alkenyl silicon-bonded groups in component (A) are exemplified by hydroxyl; alkoxy, such as methoxy, ethoxy, and propoxy; and substituted or unsubstituted monovalent hydrocarbons. The substituted and unsubstituted monovalent hydrocarbons are alkyl, such as methyl, ethyl and propyl; aryl, such as phenyl, tolyl and xylyl; aralkyl, such as benzyl and phenethyl; and haloalkyl such as 3,3,3-trifluoropropyl. Methyl, phenyl, and 3,3,3-trifluoropropyl are also preferred for the non-alkenyl silicon-bonded groups in component (A).

Component (B), which is a crosslinker, is a polyorganosiloxane having at least 2 silicon-bonded hydrogen atoms in each molecule. The molecular structure is a straight-chain, partially branched straight-chain, branched-chain, cyclic, or resin structure, with straight-chain and partially branched straight-chain structures being preferred. The silicon-bonded groups in component (B), other than hydrogen, are hydroxyl; alkoxy, such as methoxy, ethoxy and propoxy; and by substituted or unsubstituted monovalent hydrocarbon groups, as described in connection with component (A). Methyl, phenyl, and 3,3,3-trifluoropropyl are also preferred for the non-hydrogen silicon-bonded groups in component (B).

Component (B) is added in a quantity that provides from 0.1 to 10 moles, and preferably from 0.5 to 2.0 moles, of silicon-bonded hydrogen from component (B) per one mole total of alkenyl in the silicone rubber composition; that is, per one mole of the total alkenyl present in components (A) and (C). A satisfactory cure will not develop when the addition of component (B) provides less then 0.1 mole or more than 10 moles of silicon-bonded hydrogen from (B) per one mole of alkenyl in the silicone rubber composition.

Component (C) imparts a soft feel and an excellent hydrophilicity to our silicone rubber powders prepared by our cure of the silicone rubber composition.

According to the present invention component (C) is a polyorganosiloxane that is free of silicon-bonded alkenyl and silicon-bonded hydrogen which contains the polyoxyalkylene group with the formula

-R¹(OR²)ₘOR³

bonded to silicon, wherein R¹, R² , R³ and m are as defined above. The other silicon-bonded groups in this embodiment are hydroxyl; alkoxy groups, such as methoxy, ethoxy, and propoxy; and substituted or unsubstituted monovalent hydrocarbon groups. The substituted and unsubstituted monovalent hydrocarbon groups are alkyl such as methyl, ethyl and propyl; aryl, such as phenyl, tolyl and xylyl; aralkyl, such as benzyl and phenethyl; and haloalkyl such as 3,3,3-trifluoropropyl. Methyl, phenyl, and 3,3,3-trifluoropropyl are also preferred for the other silicon-bonded groups in this embodiment. The molecular structure (C) is a straight-chain, partially branched straight-chain, branched-chain, cyclic, or resin structure, with straight-chain and partially branched straight-chain structures being preferred. Component (C) is exemplified by polyorganosiloxanes with the following formulas: 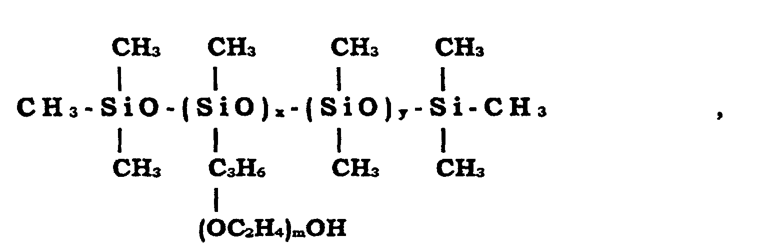 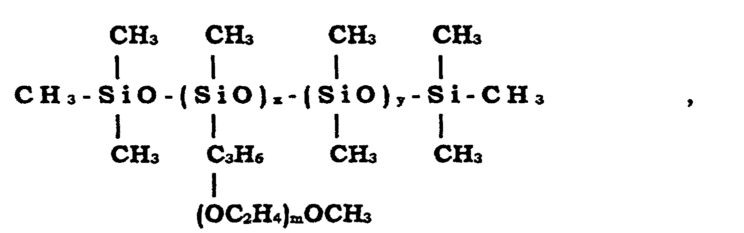 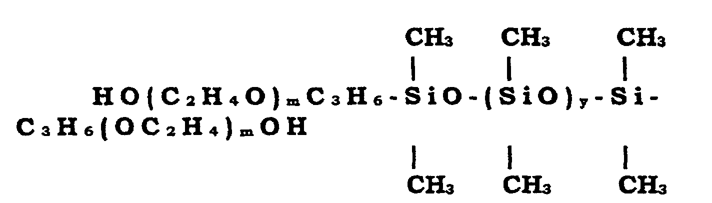 and 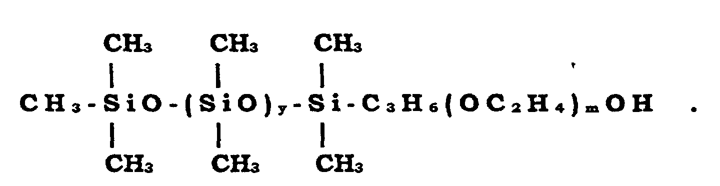 In these formulas, m is an integer with a value of 2 to 100, x is a positive integer, and y is zero or a positive integer. Silicon-bonded hydrogen that also contains the polyoxyalkylene group with the formula

-R¹(OR²)ₘOR³

bonded to silicon, wherein R¹, R² , R³ and m are as defined above. The alkenyl in this second embodiment is either vinyl, allyl, butenyl, pentenyl, and hexenyl, with vinyl being specifically preferred. The other silicon-bonded groups in this embodiment are hydroxyl; alkoxy, such as methoxy, ethoxy and propoxy; and substituted or unsubstituted monovalent hydrocarbon groups as described in connection with component (A). Component (C) (i) of this second embodiment is exemplified by polyorganosiloxanes with the following general formulas:

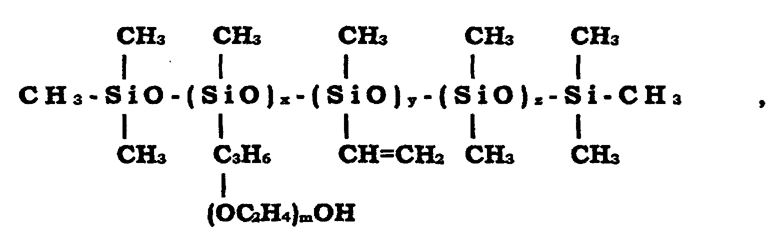

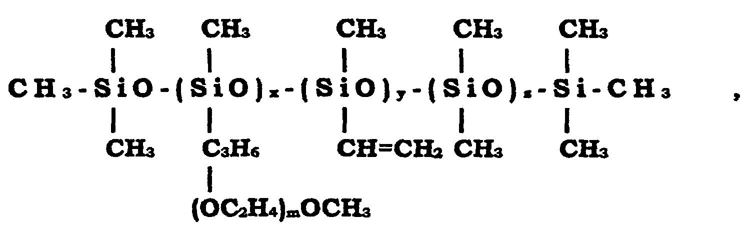

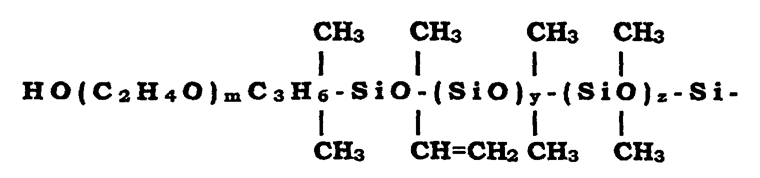

C₃H₆(OC₂H₄)ₘOH,

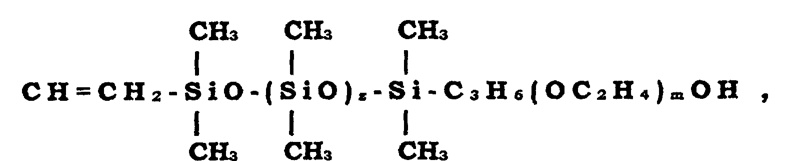

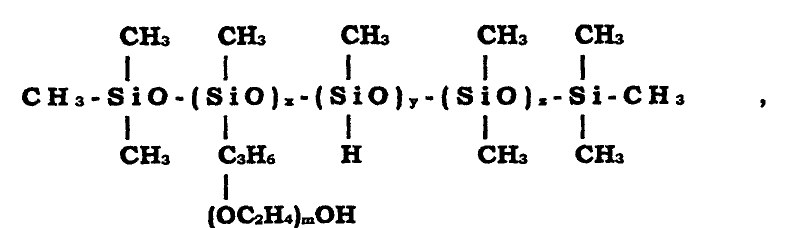

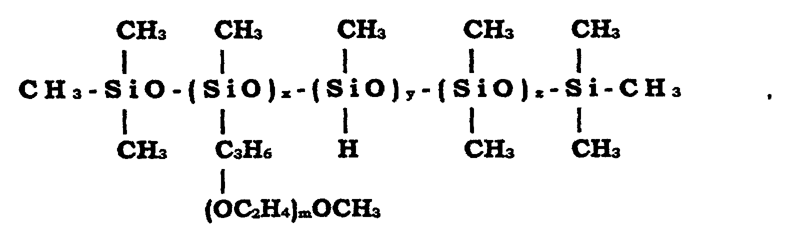

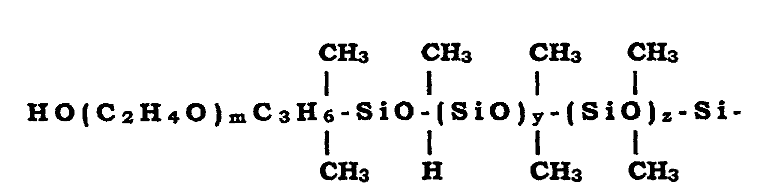

C₃H₆(OC₂H₄)ₘOH

and

Component (C) is added from 0.001 to 20 weight parts per 100 weight parts of component (A). A satisfactory hydrophilicity is not imparted to the silicone rubber powder when component (C) is added at less than 0.001 weight part per 100 weight parts of component (A). The addition of more than 20 weight parts of component (C) per 100 weight parts of component (A) will cause the silicone rubber powder to become tacky or sticky.

The platinum catalyst (D) is a catalyst for the cure of our curable silicone rubber composition and is exemplified by chloroplatinic acid, alcohol solutions of chloroplatinic acid, olefin complexes of platinum, platinum/alkenylsiloxane complexes, platinum-on-silica powders, platinum-on-active carbon powders, and platinum black.

Component (D) is added in a quantity sufficient to cure the silicone rubber composition. For example, it is preferably added in a quantity that provides 0.1 to 1,000 weight-ppm (parts per million), and more preferably 1 to 500 weight-ppm, of platinum metal in component (D) based on the total weight of components (A) and (B).

As optional components, the subject silicone rubber composition contains, for example, inorganic filler such as fumed silica, precipitated silica, quartz powder, fused silica, titanium dioxide, talc, mica, and carbon black. These inorganic fillers may also be used after surface treatment with an organosilicon compound such as organoalkoxysilane, organochlorosilane and organosilazane; Other optional components are addition-reaction inhibitors, such as alkyne alcohols (e.g., 3-methyl-1-butyn-3-ol, 3,5-dimethyl-1-hexyn-3-ol, and phenylbutynol), ene-yne compounds (e.g., 3-methyl-3-penten-1-yne or 3,5-dimethyl-3-hexen-1-yne, 1,3,5,7-tetramethyl-1,3,5,7-tetravinylcyclotetrasiloxane and 1,3,5,7-tetramethyl-1,3,5,7-tetrahexenylcyclotetrasiloxane, benzotriazole; preservatives; antimicrobials; antioxidants; fragrances; pigments; and dyes.

At least 1 inorganic filler selected from talc, mica, and fused silica is preferably added to adjust the specific gravity of our silicone rubber powder. The specific gravity of our silicone rubber powder is preferably from 0.97 to 1.20, and more preferably from 0.97 to 1.10. As a consequence, these inorganic fillers are preferably added at less than 100 weight parts, and more preferably at from 0.01 to 20 weight parts, in each case per 100 weight parts of component (A). Addition-reaction inhibitors are also preferably admixed to improve the handling characteristics of our curable silicone rubber composition. The addition-reaction inhibitor is preferably added at from 10 to 50,000 weight-ppm into the silicone rubber composition.

Our silicone rubber powder is highly hydrophilic and has a soft feel. As a consequence, it is useful as a scrub agent in cleansing facial cosmetics, and in waterborne paints, cosmetics, cleaners lustrants.

### Examples

The claimed silicone rubber powder and its method of preparation are explained in greater detail by working examples. The viscosity values reported in therein were measured at 25°C. The silicone rubber powder, its hydrophilicity, and its feel were evaluated as follows.

The average particle size was determined from the weights of silicone rubber powder passing through a series of sieves having different apertures.

Maximum particle size of the silicone rubber powder was determined by inspection on an electron micrograph.

Particle size analysis of the silicone rubber powder was determined by the content (weight%) of silicone rubber powder with a particle size from 50 micrometers to 250 micrometers.

Hydrophilicity of the silicone rubber powder was determined as follows. A waterborne dispersion was prepared from 100 weight parts of the silicone rubber powder, 4 weight parts of polyoxyethylene nonylphenyl ether (HLB = 13.1), and 1,000 weight parts of ion-exchanged water. The waterborne dispersion was then held at quiescence at room temperature for 1 week, after which its status was inspected. A score of "good" was given when the silicone rubber powder did not aggregate in the waterborne dispersion and was easily redispersible. A score of "poor" was given when the silicone rubber powder had aggregated in the waterborne dispersion and could not be redispersed.

The above-described waterborne dispersion was applied on the hands to determine "feel". A score of" + + " was rendered when the silicone rubber powder had a soft feel. A score of " + " was given when the powder occasionally had an uncomfortable, unnatural feel. A score of " x " was reported when the powder had an uncomfortable, unnatural feel and felt strongly irritating.

### Example 1

The following were mixed to homogeneity to give an addition-reaction curing silicone rubber composition: 100 weight parts of dimethylvinylsiloxy-endblocked polydimethylsiloxane with a viscosity of 100 mm2/s (centistokes), a trimethylsiloxy-endblocked polymethylhydrogensiloxane in a quantity that provided 0.85 mole of silicon-bonded hydrogen per one mole of vinyl in the dimethylvinylsiloxy-endblocked polydimethylsiloxane, an isopropanolic chloroplatinic acid solution in a quantity that provided 5 weight-ppm of platinum metal based on the combined quantity of the preceding siloxanes, one weight part of a polyoxyethylene-functional polymethylsiloxane with the formula 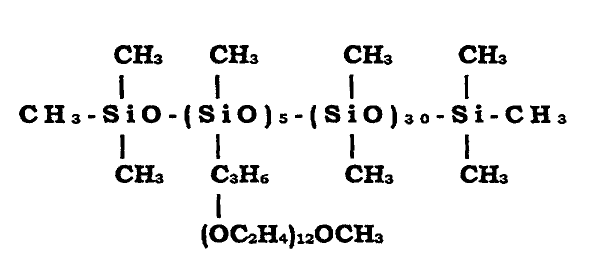 and 10 weight parts of a polymethylhydrogensiloxane-treated mica with an average particle size of 4 micrometers.

Silicone rubber was prepared by heating this silicone rubber composition at 150°C for 30 minutes. The durometer (JIS A) and specific gravity were measured, and the silicone rubber was then pulverized using a hammer mill having a rotation radius of 20 cm to give a silicone rubber powder. The properties of the produced silicone rubber powder are reported in Table 1.

### Example 2

The following were mixed to homogeneity to also give an addition-reaction curing silicone rubber composition: 100 weight parts of dimethylvinylsiloxy-endblocked polydimethylsiloxane with a viscosity of 500 mm2/s (centistokes), a polymethylsiloxane with the average unit formula 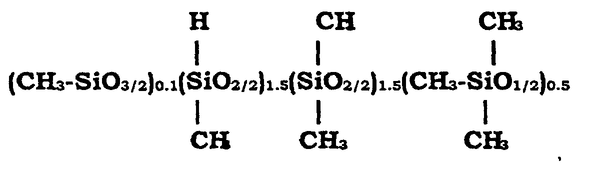 in a quantity that provided 0.95 mole of silicon-bonded hydrogen per one mole of vinyl in the dimethylvinylsiloxy-endblocked polydimethylsiloxane, an isopropanolic chloroplatinic acid solution in a quantity that provided 10 weight-ppm of platinum metal based on the combined quantity of the preceding siloxanes, 0.5 weight part of a polyoxyethylene-functional polymethylsiloxane with the formula 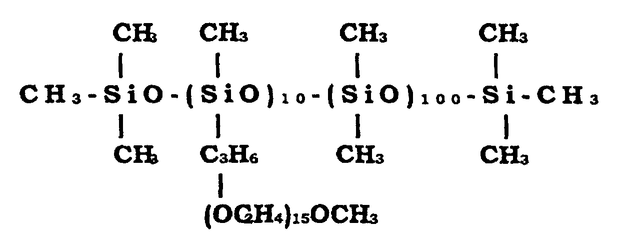 and 14 weight parts of a polymethylhydrogensiloxane-treated talc with an average particle size of 0.5 micrometer.

Silicone rubber was cured by heating this silicone rubber composition at 150°C for 30 minutes. The durometer and specific gravity were measured, and the rubber was then pulverized, as described in Example 1. The properties of this silicone rubber powder product are also reported in Table 1.

### Example 3

The following were mixed to homogeneity to also give an addition-reaction curing silicone rubber composition: 100 weight parts of dimethylvinylsiloxy-endblocked polydimethylsiloxane with a viscosity of 500 mm2/s (centistokes), a trimethylsiloxy-endblocked polymethylhydrogensiloxane in a quantity that provided 1.2 moles of silicon-bonded hydrogen per one mole of vinyl in the dimethylvinylsiloxy-endblocked polydimethylsiloxane, an isopropanolic chloroplatinic acid solution in a quantity that provided 5 weight-ppm of platinum metal based on the combined quantity of the preceding siloxanes, one weight part of a polyoxyethylene-functional polymethylsiloxane with the formula 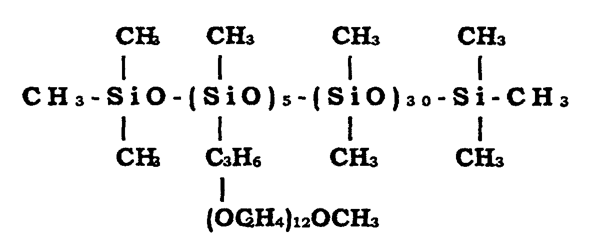 and 10 weight parts of a polymethylhydrogensiloxane-treated mica with an average particle size of 4 micrometers.

The silicone rubber was molded, tested and then pulverized, as described in Example 1. The properties of this silicone rubber powder are also given in Table 1.

### Example 4

The following were mixed to homogeneity to give an addition-reaction curing silicone rubber composition: 100 weight parts of dimethylvinylsiloxy-endblocked polydimethylsiloxane with a viscosity of 100 mm 2/s (centistokes), a trimethylsiloxy-endblocked polymethylhydrogensiloxane in a quantity that provided 0.85 mole of silicon-bonded hydrogen per one mole of vinyl in the dimethylvinylsiloxy-endblocked polydimethylsiloxane, an isopropanolic chloroplatinic acid solution in a quantity that provided 10 weight-ppm of platinum metal based on the combined quantity of the preceding siloxanes, one weight part of a polyoxyethylene-functional polymethylsiloxane with the formula 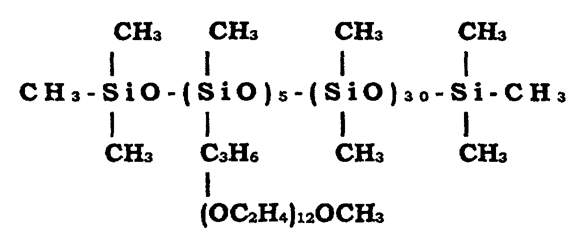 and 10 weight parts of a polymethylhydrogensiloxane-treated fused silica with an average particle size of 5 micrometers.

Silicone rubber was produced, tested and then pulverized as described in Example 1. The properties of the silicone rubber powder are listed in Table 1.

### Comparative Example 1

The following were mixed to homogeneity to give an addition-reaction curing silicone rubber composition: 100 weight parts of dimethylvinylsiloxy-endblocked polydimethylsiloxane with a viscosity of 100 mm2/s (centistokes), trimethylsiloxy-endblocked polymethylhydrogensiloxane in a quantity that provided 1.20 moles of silicon-bonded hydrogen per one mole of vinyl in the dimethylvinylsiloxy-endblocked polydimethylsiloxane, an isopropanolic chloroplatinic acid solution in a quantity that provided 5 weight-ppm of platinum metal based on the combined quantity of the preceding siloxanes, and 10 weight parts of a polymethylhydrogensiloxane-treated mica with an average particle size of 4 micrometers.

This silicone rubber was cured, tested and then pulverized by the method of Example 1. The properties of this silicone rubber powder are also reported in Table 1.

### Comparative Example 2

The following were mixed to homogeneity to give an addition-reaction curing silicone rubber composition: 100 weight parts of dimethylvinylsiloxy-endblocked polydimethylsiloxane with a viscosity of 100 mm2/s (centistokes), a trimethylsiloxy-endblocked polymethylhydrogensiloxane in a quantity that provided 1.20 moles of silicon-bonded hydrogen per one mole of vinyl in the dimethylvinylsiloxy-endblocked polydimethylsiloxane, an isopropanolic chloroplatinic acid solution in a quantity that provided 5 weight-ppm of platinum metal based on the combined quantity of the preceding siloxanes, and 10 weight parts of a polymethylhydrogensiloxane-treated mica with an average particle size of 4 micrometers.

This composition was rapidly mixed into 200 weight parts of pure water (electrical conductivity = 0.2 microS/cm) at 25°C and 4 weight parts of a polyoxyethylene-functional polymethylsiloxane with the following formula: 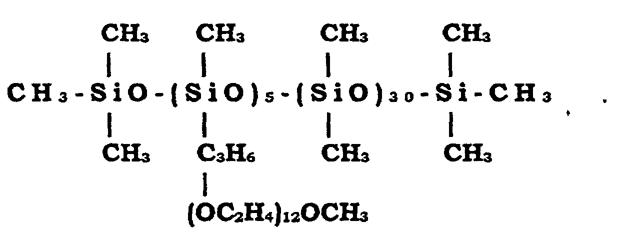 A homogeneous waterborne emulsion of the addition-reaction curing silicone rubber composition was then prepared using an homogenizer (300 kgf/cm²). This waterborne emulsion was held for 6 hours at 30°C to give a waterborne dispersion of silicone rubber powder. This waterborne dispersion was heated at 80°C for one hour. However, only a large amount of a gel-like material was produced. After this gel-like material was iltered off with a sieve of 150 mesh (0.105 mm opening), a silicone rubber powder was prepared by drying through a spray drier. The properties of the silicone rubber powder are also given in Table 1.

**Table 1**

| | present invention | | | | comparative examples | |
|---|---|---|---|---|---|---|
| | Ex. 1 | Ex. 2 | Ex. 3 | Ex. 4 | Comp. Ex. 1 | Comp. Ex. 2 |
| properties of the silicone rubber powders | | | | | | |
| JIS A durometer | 32 | 40 | 34 | 36 | 53 | 53 |
| specific gravity | 1.04 | 1.03 | 1.02 | 1.05 | 1.03 | 1.03 |
| average particle size (micrometers) | 74 | 74 | 74 | 74 | 53 | 12 |
| maximum particle size (micrometers) | 180 | 210 | 150 | 180 | 100 | 200 |
| particle size analysis (%) | 92 | 95 | 88 | 86 | 42 | 8 |
| hydrophilicity of the silicone rubber powders | good | good | good | good | poor | poor |
| feel of the silicone rubber powders | + + | + + | + + | + + | + | x |

## Claims

1. An addition reaction-curing silicone rubber composition comprising:
(A) 100 weight parts of a polyorganosiloxane that contains at least 2 silicon-bonded alkenyl groups in each molecule;
(B) a polyorganosiloxane containing at least 2 silicon-bonded hydrogen atoms in each molecule, in a quantity that provides 0.1 to 10 moles of silicon-bonded hydrogen from component (B) per one mole of alkenyl radical in the present composition;
(C) 0.001 to 20 weight parts of an polyorganosiloxane free of silicon-bonded alkenyl and silicon-bonded hydrogen, which polyorganosiloxane contains at least one polyoxyalkylene group of the formula
-R¹(OR²)ₘOR³,
wherein R¹ is an alkylene radical having 1 to 20 carbon atoms, R² is an alkylene radical having 1 to 20 carbon atoms, R³ is selected from hydrogen atom or alkyl radicals having 1 to 10 carbon atoms and m is an integer having a value of 2 to 100; and
(D) a platinum catalyst in sufficient quantity to cure the composition.

2. The composition of Claim 1, wherein said curable silicone composition further comprises an inorganic filler selected.from the group consisting of talc, mica, fused silica and combinations thereof.

3. The composition of Claims 1 or 2, wherein said oxyalkylene group comprises repeat units selected from the group consisting of ethylene oxide, propylene oxide and combinations thereof.

4. The composition according to Claim 3, wherein said polyorganosiloxane is polydimethylsiloxane.

5. The composition according to Claim 3, wherein R¹ is selected from ethylene or propylene, and R³ is selected from the group consisting of hydrogen atom or methyl, ethyl and propyl.

6. A silicone rubber powder obtained from the addition reaction-curable silicone rubber composition claimed in claim 1.

## Patentansprüche

1. Durch Additionsreaktion härtbare Siliconkautschukzusammensetzung, die die folgenden Bestandteile umfasst:
(A) 100 Gewichtsteile eines Polyorganosiloxans, das mindestens 2 Silicium-gebundene Alkenylgruppen in jedem Molekül enthält;
(B) ein Polyorganosiloxan mit mindestens 2 Silicium-gebundenen Wasserstoffatomen in jedem Molekül in einer Menge, die 0,1 bis 10 Mol Silicium-gebundenen Wasserstoff aus der Komponente (B) pro 1 Mol Alkenylrest in der vorliegenden Zusammensetzung liefert;
(C) 0,001 bis 20 Gewichtsteile eines von Silicium-gebundenen Alkenylgruppen und Silicium-gebundenem Wasserstoff freien Polyorganosiloxans, das mindestens eine Polyoxyalkylengruppe der folgenden Formel
-R¹(OR²)ₘOR³
enthält, worin R¹ für einen Alkylenrest mit 1 bis 20 Kohlenstoffatomen steht, R² für einen Alkylenrest mit 1 bis 20 Kohlenstoffatomen steht, R³ aus einem Wasserstoffatom oder Alkylresten mit 1 bis 10 Kohlenstoffatomen ausgewählt ist und m für eine ganze Zahl mit einem Wert von 2 bis 100 steht, und
(D) einen Platinkatalysator in einer zur Härtung der Zusammensetzung ausreichenden Menge.

2. Zusammensetzung nach Anspruch 1, wobei die härtbare Siliconzusammensetzung ferner einen anorganischen Füllstoff umfasst, der aus Talkum, Glimmer, Quarzstaub und Kombinationen hiervon ausgewählt ist.

3. Zusammensetzung nach Anspruch 1 oder 2, wobei die Oxyalkylengruppe Wiederholungseinheiten umfasst, die aus Ethylenoxid, Propylenoxid und Kombinationen hiervon ausgewählt sind.

4. Zusammensetzung nach Anspruch 3, wobei das Polyorganosiloxan Polydimethylsiloxan ist.

5. Zusammensetzung nach Anspruch 3, wobei R¹ aus Ethylen oder Propylen ausgewählt ist und R³ aus einem Wasserstoffatom oder Methyl, Ethyl und Propyl ausgewählt ist.

6. Siliconkautschukpulver, erhalten aus der durch Additionsreaktion härtbaren Siliconkautschukzusammensetzung nach Anspruch 1.

## Revendications

1. Composition de caoutchouc silicone réticulant par réaction d'addition comprenant :
(A) 100 parties en poids d'un polyorganosiloxane qui contient au moins 2 groupes alcényles liés à des siliciums dans chaque molécule ;
(B) un polyorganosiloxane contenant au moins 2 atomes d'hydrogène liés à des siliciums dans chaque molécule, en quantité telle qu'elle fournit 0,1 à 10 moles d'hydrogène lié à un silicium en provenance du composant (B) pour une mole de radical alcényle contenu dans la présente composition ;
(C) 0,001 à 20 parties en poids d'un polyorganosiloxane qui ne contient pas d'alcényle lié à un silicium ni d'hydrogène lié à un silicium et qui contient au moins un groupe polyoxyalkylène de formule
-R¹(OR²)ₘOR³,
dans laquelle R¹ est un radical alkylène ayant 1 à 20 atomes de carbone, R² est un radical alkylène ayant 1 à 20 atomes de carbone, R³ est choisi entre un atome d'hydrogène ou des radicaux alkyles ayant 1 à 10 atomes de carbone et m est un nombre entier ayant une valeur de 2 à 100 ; et
(D) un catalyseur à base de platine en quantité suffisante pour réticuler la composition.

2. Composition de la revendication 1, dans laquelle ladite composition de silicone réticulable comprend en plus une charge inorganique choisie dans le groupe constitué du talc, du mica, du verre de silice et d'associations de ceux-ci.

3. Composition des revendications 1 ou 2, dans laquelle ledit groupe oxyalkylène comprend des motifs répétitifs choisis dans le groupe constitué de l'oxyde d'éthylène, l'oxyde de propylène et des associations de ceux-ci.

4. Composition selon la revendication 3, dans laquelle ledit polyorganosiloxane est le polydiméthylsiloxane.

5. Composition selon la revendication 3, dans laquelle on choisit R¹ entre l'éthylène ou le propylène et on choisit R³ dans le groupe constitué de l'atome d'hydrogène ou des groupes méthyle, éthyle et propyle.

6. Poudre de caoutchouc silicone obtenue à partir de la composition de caoutchouc silicone réticulant par réaction d'addition selon la revendication 1.
